(19) **Europäisches Patentamt European Patent Office Office européen des brevets**

(11) **EP 4 390 377 B1**

(12) **EUROPEAN PATENT SPECIFICATION**

(45) Date of publication and mention
of the grant of the patent:
**12.11.2025 Bulletin 2025/46**

(21) Application number: **23305079.8**

(22) Date of filing: **23.01.2023**

(51) International Patent Classification (IPC):
**G01N 21/64** (2006.01)    **G01N 21/95** (2006.01)
**H02S 50/15** (2014.01)

(52) Cooperative Patent Classification (CPC):
**G01N 21/6489; H02S 50/15;** G01N 21/9501;
G01N 2021/646

(54) **METHOD FOR DETECTING WEAR OF PEROVSKITE SOLAR CELLS**

VERFAHREN ZUR VERSCHLEISSERKENNUNG VON PEROWSKIT-SOLARZELLEN

PROCÉDÉ DE DÉTECTION DE L'USURE DE CELLULES SOLAIRES EN PÉROVSKITE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **20.12.2022 GR 20220101057**

(43) Date of publication of application:
**26.06.2024 Bulletin 2024/26**

(73) Proprietor: **Commissariat à l'Energie Atomique et aux Energies Alternatives**
**75015 Paris (FR)**

(72) Inventors:
• **KYRANAKI, Nikoleta**
**38054 GRENOBLE CEDEX 09 (FR)**
• **CROS, Stéphane**
**38054 GRENOBLE CEDEX 09 (FR)**

(74) Representative: **Cabinet Beaumont**
**4, Place Robert Schuman**
**B.P. 1529**
**38025 Grenoble Cedex 1 (FR)**

(56) References cited:
**CN-A- 115 483 885    US-A1- 2018 159 468**

• LEI SHI ET AL: "Accelerated Lifetime Testing of Organic?Inorganic Perovskite Solar Cells Encapsulated by Polyisobutylene", APPLIED MATERIALS & INTERFACES, vol. 9, no. 30, 24 July 2017 (2017-07-24), US, pages 25073 - 25081, XP055692593, ISSN: 1944-8244, DOI: 10.1021/acsami.7b07625
• HOWARD JOHN M. ET AL: "Humidity-Induced Photoluminescence Hysteresis in Variable Cs/Br Ratio Hybrid Perovskites", JOURNAL OF PHYSICAL CHEMISTRY LETTERS, vol. 9, no. 12, 8 June 2018 (2018-06-08), US, pages 3463 - 3469, XP093069528, ISSN: 1948-7185, DOI: 10.1021/acs.jpclett.8b01357
• JOHN M HOWARD ET AL: "Quantitative predictions of photo-emission dynamics in metal halide perovskites via machine learning", ARXIV.ORG, CORNELL UNIVERSITY LIBRARY, 201 OLIN LIBRARY CORNELL UNIVERSITY ITHACA, NY 14853, 8 October 2020 (2020-10-08), XP081781269

**Description**

Technical field

The present disclosure relates generally to electronic devices and, more specifically, to perovskite solar cells. The present disclosure is more particularly directed to a method for detecting wear of perovskite solar cells and to a system configured to implement such a method.

Background art

The light conversion efficiency of perovskite solar cells has increased from roughly 10 % in 2012 to around 25 % in 2020, due in particular to the fact that the various layers of materials stacked inside the cells have been investigated and optimized. Perovskite solar cells remain, however, very sensitive to moisture, which leads to the degradation of the perovskite absorber material and therefore adversely affects the photoelectrical conversion efficiency of the cells over time. In order to solve this problem, the chemical stability of perovskite solar cells has been enhanced, for example owing to the development of encapsulation techniques allowing to delay the moisture penetration inside the cells. CN 115 483 885 A discloses an inspecting device for a Perovskite solar cell using electroluminescence measurements and the article of Lei Shi et A1.: "Accelerated Lifetime Testing of Organic-Inorganic Perovskite Solar Cells Encapsulated by Polyisobutylene",APPLIED MATERIALS & INTERFACES, vol. 9, no. 30, 24 July 2017, pages 25073-25081, ISSN: 1944-8244, DOI: 10.1021/acsami.7b07625 discloses an inspecting device for a Perovskite solar cell using electrical measurements.

However, the durability of the perovskite solar cells needs to be further improved. In particular, there is a need for reliable methods and systems enabling to detect wear of perovskite solar cells. Among other things, this would provide valuable insight regarding the durability of the cells.

Summary of invention

One embodiment addresses all or some of the drawbacks of known methods and systems for detecting wear of perovskite solar cells.

One embodiment provides a method for detecting wear of at least one perovskite solar cell, the method comprising the steps of:

a) providing at least one electrical characteristic of said at least one perovskite solar cell;
b) measuring a photoluminescence signal of said at least one perovskite solar cell only if the electrical characteristic provided at step a) is within a predefined range;
c) comparing the photoluminescence signal measured at step b) to a reference signal; and
d) if said photoluminescence signal exceeds the reference signal by a predefined deviation value or if the at least one electrical characteristic is not within the predefined range, providing a wear detection signal to a user.

According to one embodiment, the method further comprises, prior to step a), a step of measuring the reference signal of said at least one perovskite solar cell.

According to one embodiment, the photoluminescence signal measurement of step b) is performed periodically.

According to one embodiment, the photoluminescence signal measurement of step b) is performed once every several tens to several hundreds of hours, preferably once every one hundred hours.

According to one embodiment, at step b), the photoluminescence signal is measured by converting an image of said at least one perovskite solar cell into a grayscale image and by estimating an average photoluminescence value of the converted image.

According to one embodiment, the method further comprises, after step d), a step e) of refurbishing said at least one perovskite solar cell.

One embodiment provides a system for detecting wear of at least one perovskite solar cell, the system comprising a first device for providing at least one electrical characteristic of said at least one perovskite solar cell, a second device for measuring a photoluminescence signal of said at least one perovskite solar cell, and a control device configured to:

a) provide, using the first device, said at least one electrical characteristic of said at least one perovskite solar cell;
b) measure, using the second device, the photoluminescence signal of said at least one perovskite solar cell only if the electrical characteristic provided at step a) is within a predefined range;
c) compare the photoluminescence signal measured at step b) to a reference signal; and
d) if said photoluminescence signal exceeds said reference signal by a predefined threshold value or if the at least one electrical characteristic is not within the predefined range, provide a wear detection signal to a user.

According to one embodiment, the second device comprises a light source and an image sensor.

According to one embodiment, the first device comprises a maximum power point tracking device.

According to one embodiment, the control device is a computer.

Brief description of drawings

The foregoing features and advantages, as well as others, will be described in detail in the following description of specific embodiments given by way of illustration and not limitation with reference to the accompanying drawings, in which:

Figure 1 is a partial schematic sectional view of an example of a perovskite solar cell to the type of the type to which the described embodiments may apply;

Figure 2 is a graph showing curves illustrating the evolution of physical parameters of a perovskite solar cell as a function of aging time;

Figure 3 is a block diagram schematically illustrating an example of a system for detecting wear of perovskite solar cells according to an embodiment; and

Figure 4 is a flow diagram of an example of a method for detecting wear of perovskite solar cells according to an embodiment.

Description of embodiments

Like features have been designated by like references in the various figures. In particular, the structural and/or functional features that are common among the various embodiments may have the same references and may dispose identical structural, dimensional and material properties.

For the sake of clarity, only the operations and elements that are useful for an understanding of the embodiments described herein have been illustrated and described in detail. In particular, the structure and the operation of the perovskite solar cells has not been described in detail, the embodiments of the present disclosure being compatible with typical structures and operation methods of perovskite solar cells.

Unless indicated otherwise, when reference is made to two elements connected together, this signifies a direct connection without any intermediate elements other than conductors, and when reference is made to two elements coupled together, this signifies that these two elements can be connected or they can be coupled via one or more other elements.

In the following disclosure, unless indicated otherwise, when reference is made to absolute positional qualifiers, such as the terms "front", "back", "top", "bottom", "left", "right", etc., or to relative positional qualifiers, such as the terms "above", "below", "higher", "lower", etc., or to qualifiers of orientation, such as "horizontal", "vertical", etc., reference is made to the orientation shown in the figures.

Unless specified otherwise, the expressions "around", "approximately", "substantially" and "in the order of" signify within 10 %, and preferably within 5 %.

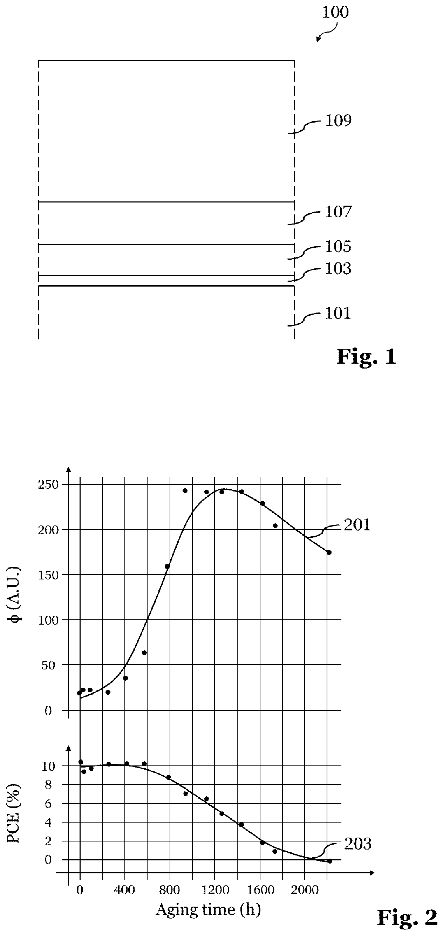

Figure 1 is a partial schematic sectional view of an example of a perovskite solar cell (PSC) 100 of the type to which the described embodiments may apply.

In the example of Figure 1, the perovskite solar or photovoltaic (PV) cell 100 comprises a transparent substrate 101. The substrate 101 is more specifically transparent to the operating wavelengths of the solar cell 100, for example transparent to visible light and near-infrared radiation. The transparent substrate 101 is for example made of glass.

In the orientation of Figure 1, the upper surface of the transparent substrate 101 is coated with an electrically conductive layer 103. The conductive layer 103 is for example an electrode of the perovskite solar cell 100. As an example, the conductive layer 103 is made of a transparent conductive oxide (TCO), for example the fluorine-doped tin oxide (FTO).

The surface of the conductive layer 103 opposite to the transparent substrate 101 (the upper surface of the layer 103, in the orientation of Figure 1), is coated with another layer 105. The layer 105 is for example made of transparent oxide(s). The layer 105 may have a single or a multilayer structure, for example a double layer structure comprising a first layer, for example made of compact tin dioxide (c-$TiO_2$), coating the upper surface of the conductive layer 103, and a second layer less compact than the first layer, for example made of mesoporous tin dioxide (m-$TiO_2$), coating the upper surface of the first layer.

As an example, the stack composed of the layers 103 and 105 has a thickness equal to around 500 nm.

The perovskite solar cell 100 of Figure 1 further comprises an active layer 107, coating the surface of the layer 105 opposite to the substrate 101 (the upper surface of the layer 105, in the orientation of Figure 1). The active layer 107 comprises one or more perovskite material(s). A perovskite material is for example a material exhibiting a crystal structure following the formula $ABX_3$, where A and B are two positively charged ions, or cations, and where X is a negatively charged ion, or anion. The X anion, typically an oxygen anion (O⁻), is bonded to A and B cations. The A and B cations may be of different sizes, the A cations being for example larger than the B cations. The present description is however not limited to the above examples. As a variant, either or both the A and B sites of the perovskite material(s) of the active layer 107 may have a configuration of $A1_{x-1}A2_x$ and/or $B1_{y-1}B2_y$, and the X anion may deviate from the ideal coordination configuration, for example as ions within the A and B sites undergo changes in their oxidation states.

As an example, the perovskite material of the active layer 107 of the solar cell 100 is a methylammonium lead halide, for example lead(II) iodide, or an organic cesium lead halide.

As an example, the perovskite material of the active layer 107 may be infiltrated within mesoporous zirconia.

As an example, the active layer has a thickness equal to around 1 $\mu$m.

In the example shown in Figure 1, the surface of the active layer 107 opposite to the substrate 101 (the upper surface of the active layer 107, in the orientation of Figure 1) is coated with an electrically conductive layer 109. The conductive layer 109 is for example another electrode of the perovskite solar cell 100. As an example, the conductive layer 109 is made of carbon, more specifically of graphite. In such a case, the cell 100 is said to be a carbon-based perovskite solar cell (c-PSC).

As an example, the conductive layer 109 has a thickness equal to around 10 $\mu$m.

In operation, the perovskite solar cell 100 of Figure 1 is for example illuminated by sunlight from the surface of the transparent substrate 101 opposite to the conductive layer 109 (the lower surface of the transparent substrate 101, in the orientation of Figure 1). The light is then absorbed by the perovskite active layer 107 and converted into electron-hole pairs, which are collected by the electrodes 103 and 109 of the solar cell 100.

Although this is not detailed in Figure 1, the solar cell 100 may be part of a solar panel, which may itself be part of a solar farm where several tens, hundreds or thousands of solar panels are connected to various electrical devices in order to provide electrical energy. As a variant, the solar panel may be installed on the roof of a house, a factory, a warehouse, a parking lot, etc. or, more generally, on top of any type of surface exposed to sunlight.

In addition to sunlight, the perovskite solar cell 100 is exposed to moisture, for example contained in the ambient air or originating from rain or snow falls. The moisture may penetrate inside the perovskite solar cell 100, thus causing detrimental effects, in particular to the active layer 107, for example due to thermally activated hydrolysis of the perovskite material. As an example, when the solar cell 100 is exposed to moisture, water can reach grain boundaries of the perovskite active layer 107 and lead to the formation of a monohydrate and/or dihydrate phase, which then for example decomposes into lead halide, for example into lead iodide in the case of a methylammonium lead iodide active layer 107, due to heat exposure. Such a phenomenon reduces the stability, thus the durability, of perovskite solar cell 100 over time.

As an example, in case of severe moisture penetration inside the perovskite solar cells 100 of a panel, detected for example by a drop in electrical energy production of the solar panel, said panel has to be replaced. This leads to an undesirable increase in the operating costs and to a decrease in availability of solar farms comprising such solar panels.

Figure 2 is a graph showing curves illustrating the evolution of physical parameters of a perovskite solar cell, for example the solar cell 100 previously described with reference to Figure 1, as a function of aging time, in hours (h), of said cell.

More specifically, in Figure 2:

a curve 201 illustrates an evolution, as a function of the aging time, of a photoluminescence (PL) intensity $\phi$ of the solar cell 100, in arbitrary units (A.U.); and another curve 203 illustrates the evolution, as a function of the aging time, of a power conversion efficiency (PCE) of the solar cell 100, in percent (%).

In the example of Figure 2, the solar cell 100 is a c-PSC cell fabricated on top of a 5 cm x 5 cm glass substrate 101 and encapsulated by an ionomer. In this example, the ionomer is coated with a multilayer polymer backsheet. The ionomer may alternatively be coated with a glass layer or with any other encapsulation layer. The solar cell 100 is for example aged at damp-heat using 85 % relative humidity and 85 °C temperature conditions, for example in an environmental chamber. As an example, the solar cell 100 is regularly removed for performing electrical characterization, such as current-tension (J-V) curves, and photoluminescence intensity measurements.

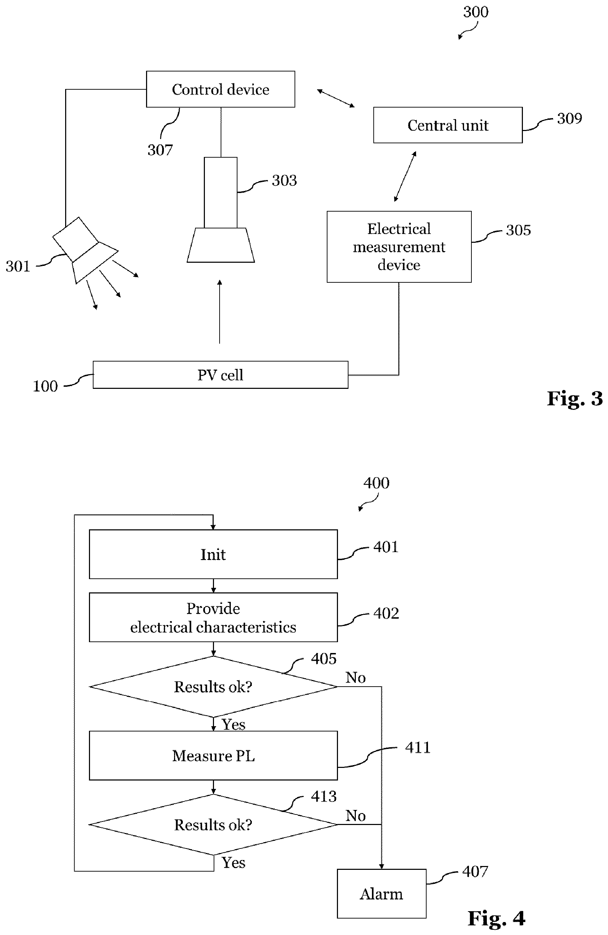

The photoluminescence intensity $\phi$ curve 201 of Figure 2 is for example obtained by irradiating the solar cell 100 with a light source and by capturing photoluminescence images of said cell after various aging durations, as it will be described in detail below with reference to Figure 3. The incident light causes an excitation of majority carriers inside the solar cell 100, which recombine radiatively. The maximum emission is for example obtained when the solar cell 100 operates at the open-circuit voltage, as no current flows inside the cell and all free carriers are thus able to recombine.

The photoluminescence intensity $\phi$ is defined by the following equation:

[Math 1]

$$\Phi = C \times \exp\left(\frac{qV}{kT}\right) + \Phi_{offset} .$$

In the equation [Math 1] above, q is the elementary charge of the carriers, k is the Boltzmann constant, V is the voltage applied between the electrodes of the solar cell 100 and T is the temperature of the cell. Furthermore, C is a calibration constant (depending on the carrier lifetime, the optical characteristics and the geometry of the cell) and $\phi_{offset}$ is a contribution of diffusion-limited carriers.

In the example illustrated in Figure 2, the power conversion efficiency (curve 203) of the perovskite solar cell 100 remains roughly constant during the first 600 hours of aging time, then starts decreasing after around 800 hours, indicating a drop in photoconversion efficiency of the solar cell 100. On the other hand, the photoluminescence intensity (curve 201) is roughly constant between 0 and 200 hours of aging time, then starts to increase after around 400 hours.

The inventors have found that the increase of the photoluminescence intensity is a reliable sign indicating that moisture ingress has occurred inside the perovskite solar cell 100. The photoluminescence signal increase is believed to be due to the passivation effect of moisture within the defects of the perovskite active layer 107, as previously described.

The photoluminescence intensity measurements thus advantageously enable to detect the wear of the perovskite solar cell 100 due to water ingress prior to detecting a drop in electrical performances. In the example of Figure 2, the moisture ingress inside the cell is detected roughly 200 hours earlier than the beginning of the degradation of the active layer 107 that leads to the decrease of the photoconversion efficiency. When the electrical performances of the cell 100 begin to decrease, the perovskite active layer 107 is for example irreversibly damaged because it has been exposed to moisture for too long, and a replacement of the entire solar panel thus needs to be foreseen.

However, detecting moisture ingress inside the cell 100 at its early stages by monitoring the photoluminescence intensity for example enables one to take preventive or corrective action before the panel is irreversibly damaged. As an example, the solar panel may be refurbished, for example by repairing the backsheet, by adding an edge sealant or by replacing the encapsulation layer of the solar cells 100 in order to reinforce or replace the encapsulation of the cell, as soon as an increase in photoluminescence intensity is detected. This enables to decrease the operating costs and to increase the availability of solar panels comprising perovskite solar cells such as the cell 100. As the variant, it is for example possible to take advantage of the early detection of moisture ingress thanks to photoluminescence intensity measurement in order to:

> save time and/or decorrelate degradation factors when characterizing perovskite solar cells;
> determine the best encapsulation technique and/or material either in a laboratory, for example at the conception stage, or in the field, for example after tens of years of operation; and/or
> allow the user of the solar panel to spot issues before the end of a warranty period of the panel.

Figure 3 is a block diagram schematically illustrating an example of a system 300 for detecting wear of perovskite solar cells, for example the perovskite solar cell 100 (PV cell) previously described with reference to Figure 1, according to an embodiment. The system 300 illustrated in Figure 3 may for example be used in a laboratory, in a solar panel manufacturing or refurbishing plant, in a solar farm, etc.

In the example shown in Figure 3, the system 300 comprises a light source 301 for irradiating the perovskite solar cell 100. The light source 301 is for example a light-emitting diode (LED), for example emitting green light towards the solar cell 100. As an example, for example when the cell 100 forms part of a solar panel of a solar farm, the light source 301 may be temporarily disposed in front of the solar cell 100 for the duration of the photoluminescence intensity measurement.

The system 300 illustrated in Figure 3 further comprises an image sensor 303 for capturing the light emitted, by photoluminescence, from the solar cell 100 when the cell is irradiated by the light source 301. The image sensor 303 is for example a CCD (charged-coupled device) camera, for example an infrared camera. In a similar way to the light source 301, the image sensor 303 may be disposed temporarily in front of the solar cell 100 depending, for example, on the foreseen application. Although this is not detailed in Figure 3, at least one filter may be disposed between the solar cell 100 and the image sensor 303.

As an example, the light source 301 and the image sensor 303 are part of a removable device, which may further comprise a cover or hood for blocking radiation other than that from the light source 301. Such a removable device comprising the light source 301 and the image sensor 303 is for example manually placed in front of the panel by an operator, for example by a member of a maintenance team, or by a robot remotely controlled by an operator, when photoluminescence measurements are needed. As a variant, the photoluminescence measurements may be performed during the night, either manually by an operator or, for example, remotely using a flying drone. In the case of measurements performed using a drone, the image sensor 303 may be capable of imaging several panels at the same time. Performing the photoluminescence measurements at night advantageously avoids or reduces the contribution of unwanted parasitic radiation. In such a case, the cover is for example omitted.

In the example illustrated in Figure 3, the system 300 further comprises an electrical measurement device 305. The device 305 is for example adapted to perform measurements of at least one electrical characteristic of the solar cell 100, for example based on current and/or voltage measurement across the electrodes of the cell. As an example, the device 305 is a current-tension measurement device, a maximum power point tracking (MPPT) device configured to periodically perform electrical measurements, for example every few milliseconds. The electrical measurement device 305 may be permanently connected to the perovskite solar cell 100, for example in solar farms where the device 305 is a MPPT device. Depending on the application, the electrical measurement device 305 may for example be coupled to a light source different from the source 301 when performing the electrical measurements.

In the shown example, the light source 301 and the image sensor 303 are connected to a control device 307. The control device 307 is for example more precisely configured to control the emission of light by the light source 301 and to control the acquisition of photoluminescence images, using the image sensor 303. As an example, the control device 307 is a programmable logic controller (PLC), a computer, for example a supervisory control and data acquisition (SCADA) control system, etc.

The control device 307 is for example adapted to convert each image captured by the image sensor 303 into a photoluminescence intensity value, for example by converting the image into a grayscale image and by estimating or extracting a mean grayscale intensity, that is to say an average photoluminescence intensity, of the converted image. However, any other image processing method may alternatively be used to estimate the photoluminescence. The control device 307 is for example further able to generate an alarm signal if either the electrical measurements, performed using the device 305, or the photoluminescence intensity measurements, performed using the light source 301 and the image sensor 303, indicate a degradation of a cell or of a solar panel. The alarm signal may further be used to raise a visual and/or audible alarm to the attention of an operator of the solar farm.

In the example of Figure 3, the system 300 further comprises a central unit 309. The central unit 309 may exchange data, for example over a wireless transmission, with the control device 307 and with the electrical measurement device 305. The central unit 309 is for example configured to collect electrical and photoluminescence characteristics transmitted by the control device 307 and by the electrical measurement device 305.

Figure 4 is a flow diagram 400 of an example of a method for detecting wear of perovskite solar cells, for example the solar cell 100 previously described with reference to Figure 1, according to an embodiment. The operations described below in relation with Figure 4 may for example be executed by the system 300 of Figure 3. More specifically, the steps of the method may be implemented by a computer program product executed by the central unit 309 of the system 300.

In the flow diagram 400, the method comprises an initial step (block 401, "Init").

At least one electrical characteristic of the solar cell 100 is then provided or measured by the electrical measurement device 305 (block 402, "Provide electrical characteristics") at this stage. Each electrical characteristic is for example based on current and/or voltage measurements across the electrodes of the solar cell 100.

Each electrical characteristic measurement of the perovskite solar cell 100 is then compared to a predefined range (block 405, "Results ok?"). The predefined range of each electrical characteristic measurement is for example based on a datasheet provided by the manufacturer of the solar cell 100, by initial characterization of the cell 100 after fabrication, etc. Furthermore, the predefined range may for example be defined based on measurements performed on a reference solar cell, for example a perovskite solar cell similar or identical to the cell 100, or on the solar cell 100 itself.

If the at least one electrical characteristic of the solar cell 100 is found to be outside the corresponding predefined range (output "No" of block 405), the solar cell 100 is considered to be worn. A wear detection signal, for example an alarm, is then provided to a user or operator (block 407). As an example, this enables the user to detect a possible failure of the panel comprising the solar cell 100 and thus to replace the panel before power generation is degraded.

On the contrary, if each electrical characteristic of the solar cell 100 is found to be within the corresponding predefined range (output "Yes" of block 405), the solar cell 100 is considered to be unworn. The wear detection method therefore carries on by performing a photoluminescence signal measurement (block 411, "Measure PL") using the light source 301 and the image sensor 303 as previously described with reference to Figure 3.

The photoluminescence intensity is then for example compared to a predefined threshold value (block 413, "Results ok?"). As an example, the threshold value is approximately equal to twice the value of a reference photoluminescence intensity value $\phi_0$. In other words, it is checked whether the photoluminescence intensity deviates from the reference value by a predefined deviation value. As an example, the deviation value is equal to the reference value. The reference photoluminescence intensity value $\phi_0$ is for example a photoluminescence intensity value measured on the cell 100 as fabricated, that is to say before it is put into operation. The photoluminescence intensity value measurement is for example performed periodically. As an example, the photoluminescence intensity value measurement is performed once every several tens to several hundreds of hours, preferably once every one hundred hours.

If the photoluminescence intensity is found to be strictly higher than the predefined threshold value (output "No" of block 413), the solar cell 100 is considered to be worn and the wear detection signal 407 is then provided to the user. As an example, this enables the user to detect the beginning of the deterioration of the panel comprising the solar cell 100, due to moisture ingress inside at least one of the cells of the panel, and thus to refurbish the panel before it is irretrievably damaged by moisture. As an example, the panel may be disconnected from the solar farm electrical devices, removed and partially dismantled in a factory in order to add sealant or replace the encapsulation layer(s), then put back in place and reconnected to the solar farm electrical devices.

On the contrary, if the photoluminescence intensity is found to be equal to or lower than the predefined threshold value (output "Yes" of block 413), the solar cell 100 is considered to be unworn and the method resumes to the initial step (block 401).

Various embodiments and variants have been described. Those skilled in the art will understand that certain features of these embodiments can be combined and other variants will readily occur to those skilled in the art. In particular, the described embodiments are not limited to the examples of materials and dimensions mentioned above.

Furthermore, what has been described with reference to solar cells is transposable by those skilled in the art to solar panels.

Finally, the practical implementation of the embodiments and variants described herein is within the capabilities of those skilled in the art based on the functional description provided hereinabove. In particular, the practical method for implementing the wear detection of perovskite solar cells using the system 300 is within the capabilities of those skilled in the art.

In particular, the determination of the values of the predefined range(s) of the electrical characteristic(s), the value of the time limit and the predefined threshold value of the photoluminescence intensity signal is within the capabilities of those skilled in the art based on the above description.

## Claims

1. A method (400) for detecting wear of at least one perovskite solar cell (100), the method comprising the steps of:

   a) providing at least one electrical characteristic (402) of said at least one perovskite solar cell;
   b) measuring a photoluminescence signal (411) of said at least one perovskite solar cell only if the electrical characteristic provided at step a) is within a predefined range;
   c) comparing the photoluminescence signal measured at step b) to a reference signal (413); and
   d) if said photoluminescence signal exceeds the reference signal by a predefined deviation value or if the at least one electrical characteristic (402) is not within the predefined range, providing a wear detection signal to a user (407).

2. The method of claim 1, further comprising, prior to step a), a step of measuring the reference signal of said at least one perovskite solar cell (100).

3. The method of claim 1 or 2, wherein the photoluminescence signal measurement (411) of step b) is performed periodically.

4. The method of claim 3, wherein the photoluminescence signal measurement (411) of step b) is performed once every several tens to several hundreds of hours, preferably once every one hundred hours.

5. The method of any of claims 1 to 4, wherein, at step b), the photoluminescence signal is measured by converting an image of said at least one perovskite solar cell (100) into a grayscale image and by estimating an average photoluminescence value of the converted image.

6. The method of any of claims 1 to 5, further comprising, after step d), a step e) of refurbishing said at least one perovskite solar cell (100).

7. A system (300) for detecting wear of at least one perovskite solar cell (100), the system comprising a first device (305) for providing at least one electrical characteristic of said at least one perovskite solar cell, a second device (301, 303) for measuring a photoluminescence signal of said at least one perovskite solar cell, and a control device (307) configured to:

   a) provide, using the first device, said at least one electrical characteristic (402) of said at least one perovskite solar cell;
   b) measure, using the second device, the photoluminescence signal (411) of said at least one perovskite solar cell only if the electrical characteristic provided at step a) is within a predefined range (405);
   c) compare the photoluminescence signal measured at step b) to a reference signal (413); and
   d) if said photoluminescence signal exceeds said reference signal by a predefined threshold value or if the at least one electrical characteristic (402) is not within the predefined range, provide a wear detection signal to a user (407).

8. The system of claim 7, wherein the second device comprises a light source (301) and an image sensor (303).

9. The system of claim 7 or 8, wherein the first device (305) comprises a maximum power point tracking device.

10. The system of any of claims 7 to 9, wherein the control device (307) is a computer.

## Patentansprüche

1. Verfahren (400) zum Detektieren des Verschleißes mindestens einer Perowskit-Solarzelle (100), wobei das Verfahren die folgenden Schritte aufweist:

   a) Vorsehen mindestens einer elektrischen Eigenschaft (402) der mindestens einen Perowskit-Solarzelle;
   b) Messen eines Photolumineszenzsignals (411) der mindestens einen Perowskit-Solarzelle nur dann, wenn die in Schritt a) bereitgestellte elektrische Eigenschaft innerhalb eines vordefinierten Bereichs liegt;

c) Vergleichen des in Schritt b) gemessenen Photolumineszenzsignals mit einem Referenzsignal (413); und

d) Vorsehen eines Verschleißerkennungssignals für einen Nutzer (407), wenn das Photolumineszenzsignal das Referenzsignal um einen vordefinierten Abweichungswert überschreitet oder wenn die mindestens eine elektrische Eigenschaft (402) nicht innerhalb des vordefinierten Bereichs liegt.

2. Verfahren nach Anspruch 1, das vor Schritt a) einen Schritt des Messens des Referenzsignals der mindestens einen Perowskit-Solarzelle (100) aufweist.

3. Verfahren nach Anspruch 1 oder 2, wobei das Messen des Photolumineszenzsignals (411) in Schritt b) periodisch durchgeführt wird.

4. Verfahren nach Anspruch 3, wobei das Messen des Photolumineszenzsignals (411) in Schritt b) einmal alle mehrere zehn bis mehrere hundert Stunden, vorzugsweise einmal alle hundert Stunden, durchgeführt wird.

5. Verfahren nach einem der Ansprüche 1 bis 4, wobei in Schritt b) das Photolumineszenzsignal gemessen wird, indem ein Bild der mindestens einen Perowskit-Solarzelle (100) in ein Graustufenbild umgewandelt wird und ein durchschnittlicher Photolumineszenzwert des umgewandelten Bildes geschätzt wird.

6. Verfahren nach einem der Ansprüche 1 bis 5, das nach Schritt d) einen Schritt e) zum Aufarbeiten der mindestens einen Perowskit-Solarzelle (100) aufweist.

7. System (300) zum Detektieren des Verschleißes mindestens einer Perowskit-Solarzelle (100), wobei das System eine erste Vorrichtung (305) zum Vorsehen mindestens einer elektrischen Eigenschaft der mindestens einen Perowskit-Solarzelle, eine zweite Vorrichtung (301, 303) zum Messen eines Photolumineszenzsignals der mindestens einen Perowskit-Solarzelle und eine Steuervorrichtung (307) aufweist, die konfiguriert ist zum:

a) Vorsehen, unter Verwendung der ersten Vorrichtung, der mindestens einen elektrischen Eigenschaft (402) der mindestens einen Perowskit-Solarzelle;

b) Messen, unter Verwendung der zweiten Vorrichtung, des Photolumineszenzsignals (411) der mindestens einen Perowskit-Solarzelle nur dann, wenn die in Schritt a) bereitgestellte elektrische Eigenschaft innerhalb eines vordefinierten Bereichs (405) liegt;

c) Vergleichen des in Schritt b) gemessenen Photolumineszenzsignals mit einem Referenzsignal (413); und

d) Vorsehen eines Verschleißerkennungssignals für einen Nutzer (407), wenn das Photolumineszenzsignal das Referenzsignal um einen vordefinierten Schwellenwert überschreitet oder wenn die mindestens eine elektrische Eigenschaft (402) nicht innerhalb des vordefinierten Bereichs liegt.

8. System nach Anspruch 7, wobei die zweite Vorrichtung eine Lichtquelle (301) und einen Bildsensor (303) aufweist.

9. System nach Anspruch 7 oder 8, wobei die erste Vorrichtung (305) eine Vorrichtung zur Nachführung des maximalen Leistungspunkts aufweist.

10. System nach einem der Ansprüche 7 bis 9, wobei die Steuervorrichtung (307) ein Computer ist.

## Revendications

1. Procédé (400) de détection de l'usure d'au moins une cellule solaire à pérovskite (100), le procédé comprenant les étapes suivantes :

a) la fourniture d'au moins une caractéristique électrique (402) de ladite au moins une cellule solaire à pérovskite ;

b) la mesure d'un signal de photoluminescence (411) de ladite au moins une cellule solaire à pérovskite uniquement si la caractéristique électrique fournie à l'étape a) se situe dans une plage prédéfinie ;

c) la comparaison du signal de photoluminescence mesuré à l'étape b) à un signal de référence (413) ; et

d) si ledit signal de photoluminescence dépasse le signal de référence d'une valeur d'écart prédéfinie ou si l'au moins une caractéristique électrique (402) n'est pas dans la plage prédéfinie, la fourniture d'un signal de détection d'usure à un utilisateur (407).

2. Procédé selon la revendication 1, comprenant en outre, avant l'étape a), une étape de mesure du signal de référence de ladite au moins une cellule solaire à pérovskite (100).

3. Procédé selon la revendication 1 ou 2, dans lequel la mesure du signal de photoluminescence (411) de l'étape b) est effectuée périodiquement.

**4.** Procédé selon la revendication 3, dans lequel la mesure du signal de photoluminescence (411) de l'étape b) est effectuée une fois toutes les quelques dizaines à plusieurs centaines d'heures, de préférence une fois toutes les cent heures.

**5.** Procédé selon l'une quelconque des revendications 1 à 4, dans lequel, à l'étape b), le signal de photoluminescence est mesuré en convertissant une image de ladite au moins une cellule solaire à pérovskite (100) en une image en niveaux de gris et en estimant une valeur de photoluminescence moyenne de l'image convertie.

**6.** Procédé selon l'une quelconque des revendications 1 à 5, comprenant en outre, après l'étape d), une étape e) de remise à neuf de ladite au moins une cellule solaire à pérovskite (100).

**7.** Système (300) de détection de l'usure d'au moins une cellule solaire à pérovskite (100), comprenant un premier dispositif (305) destiné à fournir au moins une caractéristique électrique de ladite au moins une cellule solaire à pérovskite, un deuxième dispositif (301, 303) destiné à mesurer le signal de photoluminescence de ladite au moins une cellule solaire à pérovskite, et un dispositif de commande (307) configuré pour :

a) fournir, à l'aide du premier dispositif, ladite au moins une caractéristique électrique (402) de ladite au moins une cellule solaire à pérovskite ;
b) mesurer, à l'aide du deuxième dispositif, le signal de photoluminescence (411) de ladite au moins une cellule solaire à pérovskite uniquement si la caractéristique électrique fournie à l'étape a) est comprise dans une plage prédéfinie (405) ;
c) comparer le signal de photoluminescence mesuré à l'étape b) à un signal de référence (413) ; et
d) si ledit signal de photoluminescence dépasse ledit signal de référence d'une valeur seuil prédéfinie ou si l'au moins une caractéristique électrique (402) n'est pas dans la plage prédéfinie, fournir un signal de détection d'usure à un utilisateur (407).

**8.** Système selon la revendication 7, dans lequel le deuxième dispositif comprend une source de lumière (301) et un capteur d'image (303).

**9.** Système selon la revendication 7 ou 8, dans lequel le premier dispositif (305) comprend un dispositif de suivi du point de puissance maximale.

**10.** Système selon l'une quelconque des revendications 7 à 9, dans lequel le dispositif de commande (307) est un ordinateur.

**Fig. 1**

**Fig. 2**

300

Control device

307

301

303

Central unit — 309

Electrical
measurement
device — 305

PV cell

100

**Fig. 3**

400

Init — 401

Provide
electrical characteristics — 402

Results ok? — 405    No

Yes

Measure PL — 411

Results ok? — 413    No

Yes

Alarm — 407

**Fig. 4**

# REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 115483885 A

**Non-patent literature cited in the description**

- **LEI SHI**. Accelerated Lifetime Testing of Organic-Inorganic Perovskite Solar Cells Encapsulated by Polyisobutylene. *APPLIED MATERIALS & INTER-FACES*, 24 July 2017, vol. 9 (30), ISSN 1944-8244, 25073-25081